# EUROPÄISCHE PATENTSCHRIFT

(11) **EP 2 363 282 B1**
(45) Veröffentlichungstag und Bekanntmachung des Hinweises auf die Patenterteilung: **28.08.2019**
(21) Anmeldenummer: 11156210.4
(22) Anmeldetag: 28.02.2011
(51) Int. Cl.: B32B 3/10, B32B 5/26, B32B 3/02, B32B 3/26, B32B 5/24, B32B 7/02, B32B 7/04, B32B 7/08, B32B 15/00, B32B 15/14, B29C 70/00

(54) **VERBUNDWERKSTOFF AUS MEHREREN FASERVERBUNDSCHICHTEN UND EINEM VERSTÄRKUNGSBEREICH**
COMPOSITE SUBSTANCE COMPRISING MULTIPLE FIBRE COMPOUND LAYERS AND A REINFORCEMENT AREA
MATIÈRE COMPOSITE EN PLUSIEURS COUCHES COMPOSITES FIBREUSES ET DOTÉE D'UNE ZONE DE RENFORCEMENT

(30) Priorität: 01.03.2010 DE 102010009769
(43) Veröffentlichungstag der Anmeldung: 07.09.2011
(73) Patentinhaber: Deutsches Zentrum für Luft- und Raumfahrt e.V., 51147 Köln (DE)
(72) Erfinder: Fink, Axel, 38104, Braunschweig (DE); Hühne, Christian, 38104, Braunschweig (DE)
(74) Vertreter: Einsel, Martin

(56) Entgegenhaltungen:
- EP-A2- 0 414 214
- EP-B1- 1 082 217
- DE-A1-102006 001 444
- JP-A- 4 267 142
- JP-A- 6 198 806
- JP-A- 2010 253 697
- US-A1- 2005 058 819

## Beschreibung

Die Erfindung betrifft einen Verbundwerkstoff mit mehreren Faserverbundschichten und einem Verstärkungsbereich mit mindestens einer Verstärkungsschicht aus einem die Faserverbundschichten verstärkenden Material, und mit Perforationen in der Verstärkungsschicht.

Verbundwerkstoffe aus mehreren Faserverbundschichten werden gelegentlich mit Verstärkungsschichten in bestimmten Verstärkungsbereichen ausgestattet. Diese Verstärkungsschichten sind beispielsweise Metallbleche, die lokal in dem Kopplungsbereichen von Faserverbundlaminaten integriert werden. Sie können dort bestimmte weniger günstige oder weniger gewünschte Eigenschaften von Faserverbundlaminaten positiv beeinflussen.

Dies betrifft beispielsweise die Lochleibungsfestigkeit, die Kerbfestigkeit und die Scherfestigkeit. Diese Festigkeiten sind bei Faserverbundlaminaten häufig unbefriedigend und können durch die Integration von Metallblechen verbessert werden. Diese Eigenschaften können beispielsweise für eine leistungsfähige Ankopplung des Verbundwerkstoffs an angrenzende Strukturen dadurch sorgen, dass sie Niet- oder Bolzenverbindungen besser aufnehmen können.

Der Einsatz von Verstärkungsschichten, insbesondere von Metall, zur lokalen Verstärkung von Faserverbundmaterial ist daher weit verbreitet. Meist findet eine beidseitige Verklebung von massiven Metallplatten am Faserverbundlaminat im Bereich der Fügung statt. Verbesserte Maßnahmen zur Verstärkung von Faserverbundmaterial mit Metall sehen eine lokale Implementierung von dünnen Metallblechen im Bereich der Fügung vor, in dem diese alternierend zwischen den einzelnen Faserverbundschichten oder wie in der US 7,115,323 B2 vorgeschlagen durch Substitution bestimmter Faserverbundschichten eingebettet werden.

Der Gedanke, metallische Bauteile als Verstärkungselement für die Einleitung von Kräften in geschäumte Kunststoffteile einzusetzen, also nicht in Faserverbundwerkstoffe, ist schon aus der DE 73 17 520 U1 bekannt. Dort wird vorgeschlagen, zur Verbesserung dieser Verstärkungselemente deren Gewicht weiter zu reduzieren, indem die metallischen Anschlussteile hoher Festigkeit ihrerseits in ungeschäumtem, also normalem Kunststoff ohne Gaseinschluss eingebettet werden und dieser dann erst in die geschäumten Kunststoffteile eingetragen wird. Diese Verstärkungselemente können als geschlossene Scheibe oder auch als gelochte oder geschlitzte Scheiben ausgebildet werden.

Die JP 6-198806 A beschreibt einen Verbundwerkstoff aus einer Metallfolie mit einer Anzahl von irregulär in Größe und Form angeordneten Schlitzen und einer kunststoff- oder glasfaserverstärkten Kunststoffschicht auf den beiden Seiten der Metallfolie.

Vorgeschlagen worden ist auch schon, die Metallbleche oder -platten derart zwischen den einzelnen Faserverbundschichten einzubetten, dass die Verstärkungsbleche aus dem Faserverbundwerkstoff hinaus ragen, um wie in der US-PS 4,673,606 vorgeschlagen ausschließlich im metallischen Bereich eine Verbindung mit Bolzen vorzunehmen.

Darüber hinaus schlägt beispielsweise die EP 1 082 217 B1 ein Verbundmaterial vor, bei dem der Übergangsbereich zwischen den Faserverbundschichten und dem Verstärkungsmaterial in bestimmter Weise gebildet ist. Die Faserverbundschichten werden aus durchgehenden Faserschichten gebildet, die mit Schichten des Verstärkungsmaterials kombiniert sind.

Leider besitzen Hybridlaminate gegenüber einem reinen Faserverbundwerkstoff den Nachteil, dass die Verstärkungsschicht zu einer höheren Laminatdichte und damit insgesamt zu einer höheren Laminatmasse führt. Darüber hinaus ist auch die Verbindungsfestigkeit, also die Vermeidung von Delamination der verschiedenen Schichten ein Problem, mit dem man sich bei Hybridlaminaten beschäftigen muss.

Aus einem weiteren, aus der DE 10 2006 001 444 A1 bekannten Vorschlag ist es bekannt, den Endbereich der Verstärkungsschicht beziehungsweise Metallschicht gezielt und bewusst zu schwächen, in dem dort Ausnehmungen vorgesehen werden, die in Richtung zur Endkante hin ständig größere Abmessungen annehmen. Mit dieser gezielten Schwächung sollen die Verstärkungsschichten zu ihrem Ende hin weicher ausgestaltet werden und dadurch der Gefahr einer Delamination der Metallschichten von den Faserverbundschichten entgegen getreten werden.

Die erwähnte DE 10 2006 001 444 A1 beschäftigt sich mit der Verbesserung der Situation von generischen Kanten oder auch Endbereichen von Blechen, um deren Delamination zu vermeiden. Mit belasteten Bohrungen, die aus strukturmechanischer Sicht eine ganz andere Situation darstellen, beschäftigt sich die DE 10 2006 001 444 A1 dagegen nicht.

In der CH 681 871 A5 wird eine flächige Verteilung derartiger Ausnehmungen vorgeschlagen, um die interlaminare Verbindungsfestigkeit zwischen den eingebetteten Metallschichten und den benachbarten Faserverbundschichten zu verbessern. Grundgedanke ist es dabei, die jeweils entstehenden Lochungen durch ein Matrixharz zu befüllen und so einen Formschluss ähnlich wie beim Nieten zu erzeugen.

Trotz dieser bereits zahlreichen Vorschläge zur ständig weiteren Verbesserung von Verbundwerkstoffen aus Faserverbundschichten mit Verstärkungsschichten insbesondere aus Metall besteht ein weiterer Bedarf. Dies liegt gerade an dem zunehmenden Einsatz derartiger Verbundwerkstoffe. Die Anforderungen an solche Verbundwerkstoffe steigen dadurch, um immer weiteren Randbedingungen genügen zu können. Die Festigkeit und die Reduzierung der Gefahr einer Delamination sind weiter wesentliche Gesichtspunkte und die Vorteile, die einsprechende Hybridverbundwerkstoffe besitzen, sollen nach dem Wunsch der Fachwelt immer weiter ausgebaut werden.

Aufgabe der Erfindung ist es daher, einen solchen Verbundwerkstoff vorzuschlagen.

Diese Aufgabe wird bei der Erfindung mit einem gattungsgemäßen Verbundwerkstoff dadurch gelöst, dass eine oder mehrere Bohrungen durch den Verbundwerkstoff in dem Bereich geführt sind, in welchem die Faserverbundschichten mit einer oder mehreren Verstärkungsschichten versehen sind, dass Bolzen durch die Bohrung(en) geführt sind, dass an den Bolzen Angriffsmöglichkeiten für Kräfte vorgesehen sind, dass die oder zumindest eine der Verstärkungsschichten in einem Bereich um die Bohrung(en) homogen und perforationsfrei ausgebildet ist, und dass die Verstärkungsschicht in Bereichen außerhalb des Bereiches um die Bohrung(en) mit Perforationen versehen ist, deren Größe und/oder Zahl pro Fläche in Abhängigkeit vom Beanspruchungszustand der Verstärkungsschicht in den jeweiligen Bereichen ausgebildet ist.

Die Form des homogen und perforationsfrei ausgebildeten Bereiches um die Bohrungen kann dann mit großem Vorteil in Abhängigkeit vom Beanspruchungszustand der Verstärkungsschicht in diesem Bereich ausgebildet werden. Auf diese Weise wird nicht nur der Bereich mit den Perforationen beanspruchungsgerecht gestaltet, sondern auch der Bereich ohne Perforationen. Dadurch kann das Metallblech so ausgestaltet werden, dass das Tragvermögen um einen Bolzen herum durch das Vorsehen von Perforationen nicht negativ beeinträchtigt wird.

Durch die Erfindung entsteht ein Verbundwerkstoff in Form eines Laminats, das einen Bereich als lokales Hybridlaminat aufweist. Es besteht aus Faserverbundschichten mit darin eingebetteten Verstärkenden Schichten, insbesondere Metallblechen, die als Schichtzusatz oder auch als Schichtersatz ausgebildet sind. Darüber hinaus existiert mindestens eine belastete Bohrung im Hybridbereich.

Mindestens eine der Verstärkungsschichten besitzt einen homogenen Bereich um die belastete Bohrung und um diesen homogenen Bereich herum einen durch Materialausnehmungen beziehungsweise Perforationen geschwächt ausgebildeten Bereich. Die Form und Ausführung der Schwächung ist entsprechend dem Beanspruchungszustand des Bleches ausgebildet.

Der Beanspruchungszustand des Bleches beziehungsweise der Verstärkungsschicht kann sehr präzise vorausbestimmt und festgelegt werden, wenn der Anwendungsfall für den Verbundwerkstoff bekannt ist. Ist dieser Beanspruchungszustand und seine jeweilige lokale Größe bekannt, so kann dementsprechend auch definiert die Verteilung der Perforationen nach Zahl und Größe und auch die Form des perforationsfreien, also nicht perforierten und mithin homogenen Bereiches definiert und berücksichtigt werden.

Die Materialausnehmungen sind bevorzugt in Form von Perforationen ausgebildet, die durch Laserverfahren, mechanische spanende Bearbeitung oder durch Elektronenstrahlverfahren erzeugt worden sind.

Der Bereich mit den Materialausnehmungen oder Perforationen ist mit Perforationen mit veränderlicher Packungsdichte, veränderlicher Perforationsform und/oder veränderlicher Perforationsgröße versehen. Auch Kombinationen aus diesen Möglichkeiten sind in Ausführungsformen denkbar. Es können auch unterschiedliche Bereiche mit unterschiedlichen Änderungen ausgestattet werden.

Der Grad der Ausnehmung beziehungsweise die Veränderungen an Packungsdichte, Perforationsform und Perforationsgröße ist vorzugsweise fließend vom niedrig belasteten Bereich weiter außen abnehmend hin zum höher belasteten Bereich in der Nähe der Bohrung ausgebildet.

Die Perforationen können bevorzugt mit Harz ausgefüllt sein, das aus benachbarten Faserverbundschichten stammt. Dieses Harz führt zu einem zusätzlichen Formschluss zwischen den Faserverbundschichten und der Verstärkungsschicht in Form des perforierten Metallblechs.

Durch die Erfindung wird ein tatsächlich weiter verbesserter Verbundwerkstoff geschaffen, dessen Eigenschaften die bereits ausgezeichneten Eigenschaften von Verbundwerkstoffen etwa aus der DE 10 2006 001 444 A1 übertreffen.

Dies gilt insbesondere hinsichtlich der Masseneffizienz des Verbundwerkstoffs und der leichtbauspezifischen Eigenschaften.

Anders als bei diesem bekannten Verbundwerkstoff werden jetzt Perforationen in den Verstärkungsbereichen, also insbesondere in der Verstärkungsschicht, speziell der Metallschicht oder dem Metallblech, nicht oder nicht nur in dessen Endbereich beim Anstoßen an benachbarte Faserverbundschichten vorgesehen. Stattdessen findet eine Perforation in Bereichen statt, die bei Belastungen weniger stark beansprucht werden.

Die Perforation findet bevorzugt in all jenen Bereichen statt, die bei Belastungen weniger stark beansprucht werden.

Das ermöglicht es, eine Bohrung (oder mehrere Bohrungen) in dem Verbundwerkstoff durch die Verstärkungsschichten zu setzen und in diesen Bohrungen Bolzen zu verankern. An diesen Bolzen können dann Kräfte angreifen. Diese Kräfte werden in der Verstärkungsschicht von den Bolzen auf die Verstärkungsschicht übertragen, wobei die größten Beanspruchungen unmittelbar in der Umgebung des Bolzens wirken. Genau dort sind nun keine Perforationen, sondern ein homogener Werkstoff vorgesehen.

Die Form und die Ausmaße der unperforierten Bereiche hängen vom Belastungszustand der Verstärkungsschicht, insbesondere des Verstärkungsblechs, ab.

In den abseits von diesen besonders stark beanspruchten Regionen liegenden Bereichen der Verstärkungsschicht beziehungsweise des Metallblechs sind jetzt jedoch Perforationen vorgesehen, und zwar nach Größe und/oder nach Zahl pro Fläche in unterschiedlicher Form. Je weniger beansprucht ein entsprechendes Flächenstück der Verstärkungsschicht ist, desto mehr oder desto größere Perforationen sind dort vorgesehen.

Der komplexe, mehrachsige Beanspruchungszustand des Laminates an einem belasteten Loch, also der Bohrung mit dem hindurchgeführten Bolzen, ist in einem eingeschränkten Bereich um die Bohrung lokalisiert. Angesichts des in Analogie zum reinen Faserverbundlaminat spröden Bruchverhaltens des Verbundwerkstoffes aus Faserverbundschichten mit Verstärkungsschicht, also des gebildeten Hybridlaminates, wirkt sich dieser lokale Beanspruchungszustand durch deren Kerbwirkung besonders aus, welche ohne die Erfindung schließlich ein Versagen durch einen Wangen-, Cleaveage- oder Scherbruch bewirkt. Ein Wangenbruch ist ein Zugbruch des Nettoquerschnittes, ein Scherbruch ist ein Ausscheren des Laminates zum Rand in Belastungsrichtung und ein Cleavagebruch ist eine Kombination aus Scher- und Wangenbruch.

Darüber hinaus besteht auch noch die Möglichkeit eines Lochleibungsbruches, das ist ein lokales Druckversagen des Laminates an der Kontaktfläche zum Bolzen in der Bohrung. Ein Lochleibungsbruch wird durch das lokale Druckversagen der einzelnen Schichten an der Bolzenkontaktzone eingeleitet. Da die Verstärkung durch Metallbleche im Laminat sich aufgrund der lokalisierten Beanspruchung primär im unmittelbaren Bereich um das belastete Loch auswirkt, ist das Verstärkungsmaterial in den weniger beanspruchten Bereichen nicht ausgenutzt und - wie die Erfindung feststellt und mit Erfolg nutzt - daher nicht notwendig.

Die Ineffizienz der Verstärkungsbleche in Bereichen geringer Materialbeanspruchung wird hierbei ausgeprägter im Fall einer Schichtaddition. Die vollständige Entfernung des Materials der Bleche, welches einer großen Beanspruchung unterzogen wird, stellt hierbei zunächst eine logisch erscheinende, jedoch keine sinnvolle Maßnahme dar: die minimierten Verstärkungselemente, welche um das belastete Loch der Verbindung platziert werden würden, wären zu unhandlich und im Rahmen eines konventionellen Fertigungsprozesses nicht umsetzbar.

Auf der anderen Seite müssen diese lokalen Blechelemente eine ausreichende flächige Ausprägung haben, damit die Lasteinleitung und Umlagerung zwischen den Schichten erfolgen kann, ohne die Gefahr einer Delamination (Schichttrennung) der eingebetteten Metallelemente, sodass eine Minimierung der Größe der Verstärkungselemente entsprechend der lokalen Spannungsüberhöhungen nicht ratsam ist.

Desweiteren würden die angrenzenden Lagen im Fall einer Schichtaddition (das heißt Blechelemente zwischen den einzelnen Faserverbundschichten eingebettet) sehr ungünstige Sprünge und unregelmäßige Umlenkungen erfahren.

Die vorliegende Erfindung schlägt nun eine konstruktive Methode vor, mit deren Hilfe die Masse der Verstärkungsbleche herabgesetzt werden kann, ohne den Verstärkungseffekt zu beeinträchtigen, ohne nachteilige Sekundäreffekte zu erzeugen oder den Fertigungsprozess zu erschweren. Durch das Herabsetzen der Blechmasse kann daher das Gesamtgewicht des Hybridlaminates und damit der Verstärkung maßgeblich herabgesetzt werden.

Diese Vorteile der Erfindung beruhen auf der Generierung einer gezielten strukturierten, der Materialbeanspruchung angepassten Materialausnehmung. Diese Materialausnehmungen sind vorzugsweise als Mikroperforationen realisiert. Die Packungsdichte, die flächige Ausbreitung und die Größe der Mikroperforationen können variabel gestaltet werden und entsprechend der Belastungszustände angepasst werden. Die Mikroperforationen können beispielsweise durch Laserverfahren, spanende mechanische Verfahren oder Elektronenstrahlverfahren realisiert werden. Mit den bestehenden Technologien können Perforationsdurchmesser von bis zu 60 Mikrometern erzeugt werden.

Die Perforationen können entsprechend des Beanspruchungszustandes beziehungsweise des Versagens angepasst werden: bei hohen Lochleibungsspannungen beziehungsweise bei Lochleibungsversagen des Hybridlaminates sollte die Verstärkung mit homogenem Blechmaterial primär im Kontaktbereich des Bolzens vorgesehen werden, sodass der umliegende Bereich der Verstärkungsbleche verschwächt, das heißt mit Mikroperforationen ausgeführt werden kann. Bei durch Wangenbruch versagenden Verbindungen bietet sich die Verstärkung im Bereich des Kerbgrundes oder im gesamten Nettoquerschnitt an. Der übrige, weniger ausgelastete Bereich kann dann perforiert ausgeführt werden. Im Falle eines Scherbruches des Hybridlaminates sollten die Verstärkungsbleche im Scherbereich keine Perforationen aufweisen.

Der homogene, nicht perforierte Bereich sollte eine ausreichende Größe haben, damit über die Fläche die Lasten des Verstärkungsbleches an die Nachbarschichten angegeben werden kann. Zweckmäßigerweise soll der Grad der Abschwächung durch Perforation vom homogenen höchstbelasteten (unperforierten) Bereich bis hin zu den geringer belasteten Bereichen kontinuierlich zunehmen, sodass die maximal geschwächten Bereiche sich im Bereich des Blechauslaufs (Rand) befinden.

Durch die Perforation der Verstärkungsbleche wird die effektive Steifigkeit des Bleches reduziert. Auf diese Weise entstehen geringere Steifigkeitssprünge zwischen dem reinen Faserverbundlaminat und dem Hybridlaminat; die Lastaufnahme des verstärkenden Metallbleches kann somit weicher und gleichmäßiger erfolgen. Zudem resultiert aus der Perforationsstruktur ein mechanischer Formschluss zu den benachbarten Faserverbundschichten durch das infiltierte, ausgehärtete und als Mikroniete agierende Harz. Beide Mechanismen zusammen verbessern die Haftung zwischen dem Blech und den angrenzenden Faserverbundschichten und vermeiden somit die Gefahr von Delaminationen.

Selbst mit mikroperforierten Bereichen behält das Blech seine Ebenheit und Handhabbarkeit, die Integration als Verstärkung kann somit problemlos erfolgen. Diese technische Lösung ist in erster Linie für quasistatisch beanspruchte Bauteile sinnvoll. Bei ermüdungskritischen Bauteilen wirken sich die Perforationen als potentielle Rissentstehungsquellen und beeinträchtigen daher erheblich die Dauerfestigkeit der Fügung.

Die lokale Verstärkung eines Faserverbundmaterials, beispielsweise also als glasfaserverstärkter, als aramidfaserverstärkter oder auch als kohlenstofffaserverstärkter Kunststoff, mit den erwähnten eingebetteten Metallblechen führt zu einer Erhöhung der Gesamtlaminatdichte.

Durch den erfindungsgemäßen Einsatz von Metallblechen mit gezielt angeordneten und ausgebildeten Perforationen zur lokalen Verstärkung eines Verbundwerkstoffs lassen sich auch Gewichtsvorteile verzeichnen, beispielsweise im Rahmen einer Massenbilanz, die den gesamten Kopplungsbereich einschließlich der Anschlusselemente berücksichtigt. Die Anforderungen an einen effizienten Leichtbau steigen jedoch kontinuierlich weiter.

Es wird daher nach wie vor gewünscht, die gewichtsspezifischen Laminatwerte der lokalen Hybridmaterialien weiter zu verbessern.

Die als Verstärkungsmetalle insbesondere in Betracht kommenden Werkstoffe wie Titan, Stahl und/oder Kobalt weisen eine höhere Dichte auf als die Faserverbundmaterialien.

Ausschlaggebend für die Beurteilung eines Leichtbaupotentials eines Konstruktionswerkstoffes sind jedoch weniger die absoluten Werte, sondern vielmehr die spezifischen, insbesondere auf das spezifische Gewicht (die Dichte) bezogenen Absolutwerte.

Bei einigen Verstärkungswerkstoffen mit einer höheren Dichte, wie beispielsweise Stahl, ergibt sich für das Hybridlaminat daher ein etwas höherer Anstieg der Dichte im Vergleich zum entsprechenden Verstärkungseffekt in formhöherer Festigkeit. Daraus folgt, dass die spezifischen, Laminat bezogenen Werte in diesem Fall geringer ausfallen als die des eigentlichen Referenzmaterials, also des Faserverbundmaterials.

Trotz dieser Gewichtseinbußen in Bezug auf das Laminat erlaubt es der erfindungsgemäße Verstärkungseffekt, der größer ist als bei leichteren Werkstoffen wie Titan, selbst in solchen Fällen noch, wichtige Masseneinsparungen im Verbindungsbereich zu erzielen.

Für Kopplungsbereiche mit Niet- oder Bolzenverbindungen sind zwar die spezifischen Werte für die Dichte nicht für eine globale Massenbilanz ausschlaggebend, sondern vielmehr die höheren Absolutwerte. Eine Gewichtsoptimierung der Verstärkung wird durch die Erfindung jedoch auch durch eine Verringerung des Laminatgewichtes und somit durch eine Erhöhung der spezifischen Festigkeiten erreicht. Dadurch wird die Problemstellung gelöst, dass konventionelle Ausführungsformen von Hybridverbundwerkstoffen zwar den Vorteil einer lokalen Verstärkung von mechanischen Fügungen mit eingebetteten Metallschichten aufweisen, dies jedoch stets mit einem nachteiligen höheren Laminatgewicht einhergeht. Dies wird durch die Erfindung deutlich verbessert.

Es entsteht eine Effizienzsteigerung beziehungsweise eine Gewichtsreduktion von Verbindungsbereichen bei Bolzen- oder Nietverbindungen und Ähnlichen an Faserverbundlaminaten, welche lokal eine Verstärkung durch eingebettete insbesondere Metallbleche aufweisen.

Die vorgestellte Technologie der strukturierten Perforation von Metallblechen lässt sich sowohl für Verbindungen mit nur einem Bolzen, punktuelle Verbindungen, als auch für ein- oder mehrreihige kontinuierliche Verbindungen einsetzen.

Im Folgenden wird anhand der Zeichnung der technische Hintergrund der Erfindung und ein Ausführungsbeispiel der Erfindung näher beschrieben. Es zeigen:
- **Figur 1**: eine Draufsicht auf ein Faserverbundlaminat mit einem Fügebereich mit Bohrungen und mit eingebetteten Metallblechen;
- **Figur 2**: einen Schnitt durch die Figur 1 längs der Linie A-A bei einer ersten Alternative;
- **Figur 3**: einen Schnitt durch die Figur 1 längs der Linie A-A bei einer zweiten Alternative;
- **Figur 4**: eine FEM-Simulation des Beanspruchungszustandes eines in einem Faserverbundlaminat eingebetteten Titanbleches vor Beginn der ersten Plastizitätserscheinungen;
- **Figur 5**: eine FEM-Simulation des Beanspruchungszustandes eines in einem Faserverbundlaminat eingebetteten Titanbleches beim Bruch der Verbindung;
- **Figur 6**: ein Beispiel für einen Einflussbereich um ein Loch;
- **Figur 7**: eine Draufsicht auf den Bereich um ein belastetes Loch entsprechend Figur 6 mit mehreren unterschiedlichen Versagensformen;
- **Figur 8**: eine Ausführungsform der Erfindung mit einem größer heraus gezeichneten Detail;
- **Figur 9**: eine weitere Ausführungsform der Erfindung.

Zunächst soll der grundsätzliche Aufbau und Hintergrund von Verbundwerkstoffen mit Faserverbundschichten und Verstärkungselementen erläutert werden. Die ersten drei Figuren zeigen für den heutigen Stand der Technik typische Ausführungen der lokalen Verstärkung von mechanischen Fügungen an Faserverbundlaminaten mit eingebetteten Metallblechen.

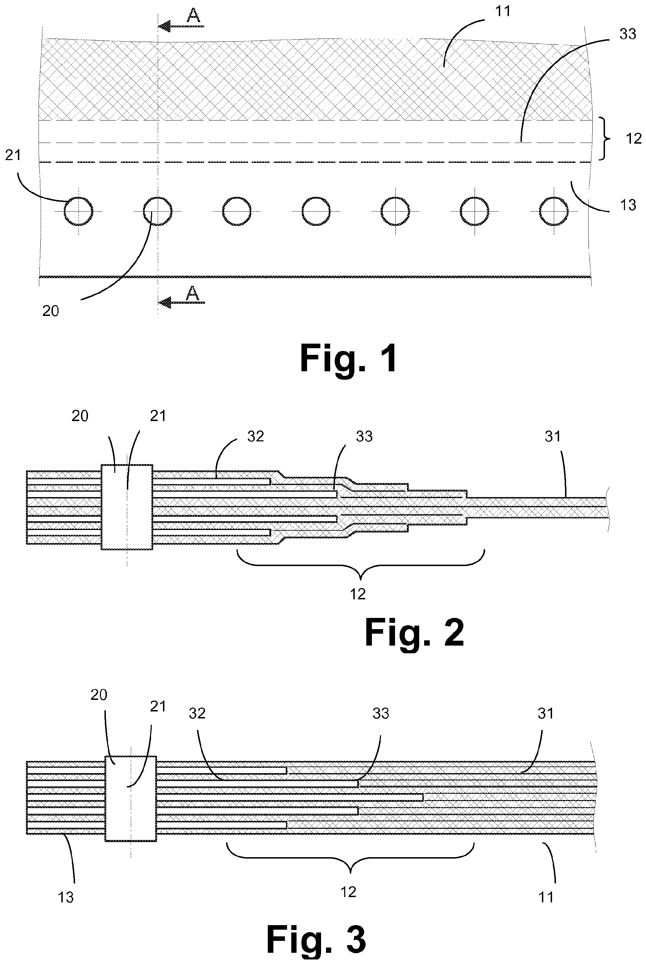

**Figur 1** zeigt eine Draufsicht auf eine typische Ausführung einer einreihigen Bolzenverbindung mit einem Verbundwerkstoff. In der Draufsicht sieht man von oben nach unten dargestellt zunächst einen Bereich, in dem ein reines Faserverbund- Basislaminat 11 noch ohne metallische Verstärkungen vorhanden ist. Weiter nach unten in der Figur 1 schließt sich ein Übergangsbereich 12 an und an diesen wiederum ein hybrider Bereich 13. In dem hybriden Bereich 13 sind die Verstärkungsschichten, insbesondere also die metallischen Schichten, schon vollständig vorhanden.

Durch den hybriden Bereich 13 sind mehrere Bohrungen 20 geführt. Die Bohrungen 20 verlaufen senkrecht zu der Zeichenebene in Figur 1. Alle Bohrungen 20 sind in dem dargestellten Ausführungsbeispiel in einer Reihe hintereinander beziehungsweise nebeneinander vorgesehen. Man erkennt ferner eine Reihe von Bolzen 21, die im hybriden Bereich 13 positioniert ist. Die Bolzen 21 verlaufen durch die Bohrungen 20.

**Figur 2** stellt einen Schnitt durch den Verbundwerkstoff in Figur 1 längs der Linie A-A dar. Es handelt sich um eine erste Grundausführung einer lokalen Einbettung von Metallschichten. Figur 2 zeigt dabei eine Verstärkung durch Schichtzusatz, das heißt zwischen kontinuierliche Faserverbundschichten 31 werden Verstärkungsschichten 32, insbesondere verstärkende Metallschichten eingelegt. Die verstärkenden Metallschichten 32 besitzen einen Rand 33, insbesondere also einen Blechrand 33. Diesen Blechrand 33 kann man auch in der Figur 1 erkennen, er verläuft unter anderem mittig in dem Übergangsbereich 12. Am Blechrand 33 entstehen auf diese Weise Umlenkungen der Faserverbundschichten 31.

Im hybriden Bereich 13 bestehend aus Faserverbundschichten 31 und Metallschichten oder anderen Verstärkungsschichten 32 wird die eigentliche mechanische Fügung, beispielsweise mit Bolzen 21 in den Bohrungen 20 vorgesehen. Die Verstärkungsschichten 32 sind meist und auch bevorzugt Metallschichten. Grundsätzlich wären aber auch andere Werkstoffe denkbar, die eine verstärkende Wirkung haben und bevorzugt auch die weiteren vorteilhaften Eigenschaften von Metallen besitzen, hier beispielsweise die homogene Ausbildung und die gleichförmige Struktur, die nicht in bestimmten Richtungen unterschiedliche Werte annehmen. In der weiteren Beschreibung ist häufig vereinfachend von "Metallschichten" die Rede, da es sich um die bevorzugte Ausführungsform handelt. Auch dort könnten grundsätzlich aber auch andere Verstärkungsschichten eingesetzt werden.

In der **Figur 3** ist ebenfalls ein Schnitt durch die Figur 1 längs der Linie A-A dargestellt, und zwar bei einer anderen Grundausführung einer lokalen Einbettung von Metallschichten oder anderen Verstärkungsschichten 32. Bei dieser Ausführungsform wird die lokale Verstärkung durch Schichtersatz ausgeführt, das heißt bestimmte Schichten der Faserverbundschichten 31 werden durch die verstärkenden Metallbleche oder -schichten 32 ersetzt. Die ersetzten Faserverbundschichten 31 sind somit unterbrochen und liegen auf Stoß zu den verstärkenden Metallschichten 32 an deren Rand 33.

Die mechanische Fügung etwa mittels Bolzen 21 wird auch hier im Bereich 13 des hybriden Materials durchgeführt.

Es ist ersichtlich, dass im Stand der Technik bei beiden Ausführungsformen im Bereich der mechanischen Fügung ein Hybridmaterial vorliegt, und zwar bestehend aus Faserverbundschichten 31 und verstärkenden Metallschichten 32, welche homogen und ungestört sind - abgesehen von den Bohrungen für die Aufnahme der Verbindungsbolzen 21.

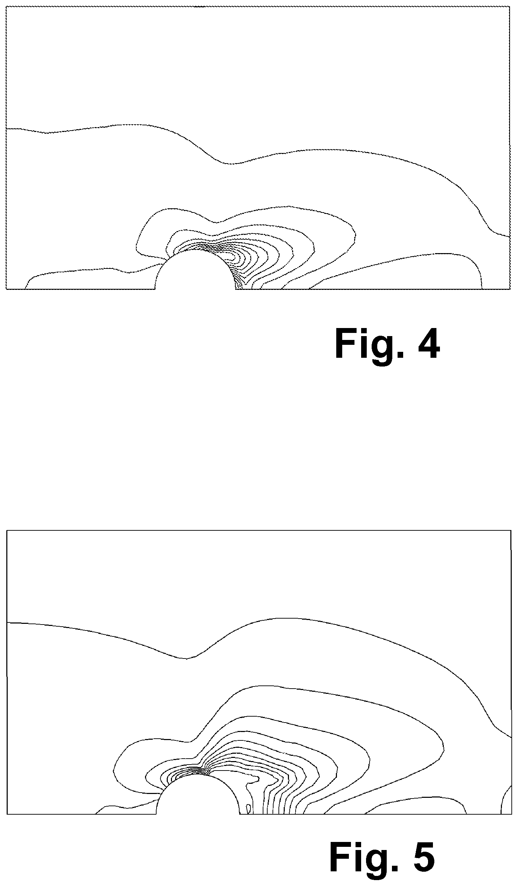

**Figur 4** und **Figur 5** zeigen den Beanspruchungszustand (aus einer FEM-Simulation) eines in einem Faserverbundlaminat eingebetteten Titanbleches als Metallschicht 32 um eine von einem Titanbolzen 21 belastete Bohrung (Belastungsrichtung von links nach rechts). Ausgegeben ist die Vergleichsspannung von Mises unter Berücksichtigung eines elastisch/ideal-plastischen Verhaltens des Titans der Metallschicht 32.

Figur 4 zeigt den Spannungszustand kurz vor dem Beginn der ersten Plastizitätserscheinungen am Kerbgrund. Das Materialverhalten ist elastisch. Der Kerbgrund entspricht der lokalen Spannungsüberhöhung am Lochrand des Loches für den Bolzen 21.

Figur 5 zeigt dagegen den Spannungszustand beim Bruch der Verbindung, die durch eine Akkumulation der plastischen Verformung (bei ideal duktilem Material) im Bereich der Kontaktfläche mit dem Bolzen 21 einhergeht.

Aus beiden Verläufen ist ersichtlich, dass die Spannungskonzentrationen in einem geringeren Bereich um die belastete Bohrung lokalisiert sind. Diese Spannungskonzentrationen können, je nach Probegeometrie und Laminataufbau, zu unterschiedlichen Versagensformen führen.

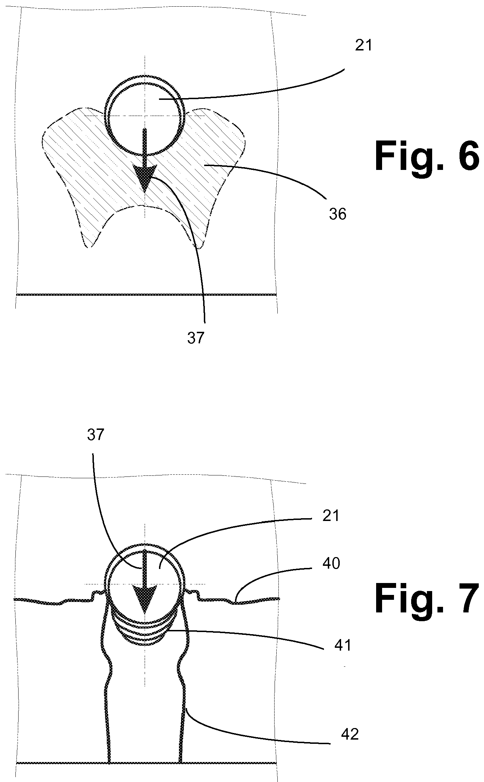

In **Figur 6** ist schematisch ein exemplarischer Einflussbereich 36 wiedergegeben, der die Spannungsüberhöhungen um ein in Richtung 37 von einem Bolzen 21 belastetes Loch im Hybridlaminat 13 umfasst. Dieser Bereich schließt die Beanspruchungen ein, die letztlich zum Versagen der Verbindung führen. Für andere Belastungsrichtungen, oder bei kombinierten Belastungsrichtungen, ergeben sich wohlgemerkt verschiedene Einflusszonen der Spannungsüberhöhungen.

Ausgehend von den Spannungskonzentrationen im Einflussbereich können verschiedene Versagensformen auftreten, die in **Figur 7** schematisch wiedergegeben sind: Wangenbruch 40, Lochleibungsbruch 41 oder Scherbruch 42 (oder eine Kombination).

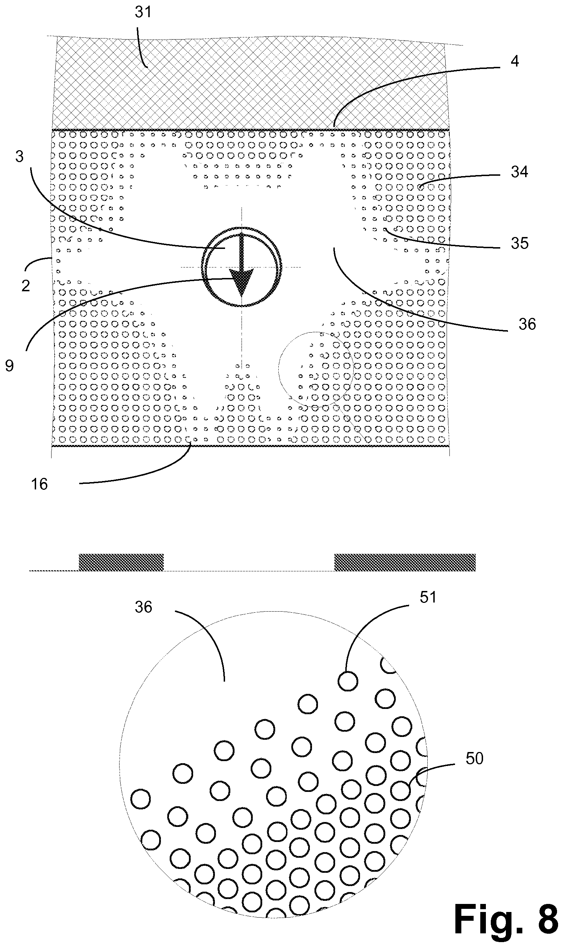

In **Figur 8** ist anhand einer Ausführungsform der Gegenstand der vorliegenden Erfindung dargestellt. Wie in den Figuren 1 bis 3 sieht man wiederum einen Verbundwerkstoff, hier in Draufsicht. Zwischen Faserverbundschichten 31 sind hier bevorzugt Verstärkungsbleche aus Metall lokal durch Schichtaddition (zwischen den Faserverbundschichten 32) oder durch Schichtersatz (bei Substitution bestimmter Faserverbundschichten 32) im Faserverbundlaminat eingebettet. In dem Verbindungsbereich sind Bohrungen 20 vorgesehen, die durch einen Bolzen 21 belastet werden. Die Verstärkungsschichten können beispielsweise aus Stahl, Titan, Kobald, Aluminium oder auch aus anderen Metallen gebildet werden. Zwecks Reduktion der Masse der an einer Faserverbundschicht 31 auf Stoß anliegenden Verstärkungsschicht 32 beziehungsweise Metallschicht in Form eines verstärkenden Bleches werden in niedrig belasteten Bereichen 34 und 35 Perforationen 50 vorgesehen. Hochbelastete Einflussbereiche 36 bleiben homogen und ungestört, so dass dort die maximale Festigkeitskapazität des verstärkenden Metalls ausgenutzt werden kann.

Mindestens eine der Verstärkungsschichten 32 zeigt wie in der Figur 8 schematisch angedeutet also einen homogenen und ungestörten Bereich 36 um die Bohrung 20 herum. In den Bereichen in größerer Entfernung von der Bohrung 20, in denen die Belastung geringer ist, ist ein strukturiertes Muster an Perforationen 50 und 51 zu erkennen. Die Ausprägung und die Gestalt des homogenen Bereiches 36 leitet sich aus dem Beanspruchungszustand beziehungsweise der Bruchcharakteristik des speziellen Hybridlaminates ab, die zuvor ermittelt werden kann.

Die Struktur der Perforationen 50, 51 weist unterschiedliche Gestaltengrößen von Perforationen auf, was in der Figur 8 nur angedeutet ist. Hier sieht man insbesondere eine unterschiedliche Packungsdichte der Perforationen.

Es ist auch möglich, verschiedene Strukturen der Bereiche 34, 35, 36 für unterschiedliche Verstärkungsschichten 32 des Verbundwerkstoffes vorzusehen.

Die Perforationsstruktur kann derart konfiguriert sein, dass ein abnehmender Grad der Zahl und/oder Größe der Ausnehmungen vom niedrig belasteten zum höchstbelasteten, homogenen Bereich hin abnimmt. Der abnehmende Grad der Zahl und/oder Größe der Ausnehmungen kann derart realisiert werden, dass die Packungsdichte der Perforationen 50 abnimmt, wie im Detail A der Figur 8 dargestellt ist: der Abstand der Ausnehmungen oder Perforationen 50 beziehungsweise 51 zueinander nimmt vom niedrig belasteten Bereich 34 zum höher belasteten Bereich 35 zu. Dies kann aber auch mit veränderlicher Form und Größe der Perforationen 50, 51 ausgeführt werden, hinsichtlich der Produktion solcher Perforationsmuster erscheint hierbei jedoch die Variation der Packungsdichte als die effizientere Methode für eine progressive Gestaltung der Ausnehmungen.

Die Gestalt des lokalen homogenen Bereichs, die Form und Art der strukturierten Ausnehmungen kann hierbei von Metallschicht 32 zu Metallschicht 32 im Bereich eines belasteten Loches für einen Bolzen 21 oder zu anderen Zwecken verschieden sein. Auf diese Weise lässt sich die Verstärkung für den gegebenen Fall maßschneidern und folglich die maximale Effizienz der Verstärkung bei Minimierung des Laminatgewichtes erzielen.

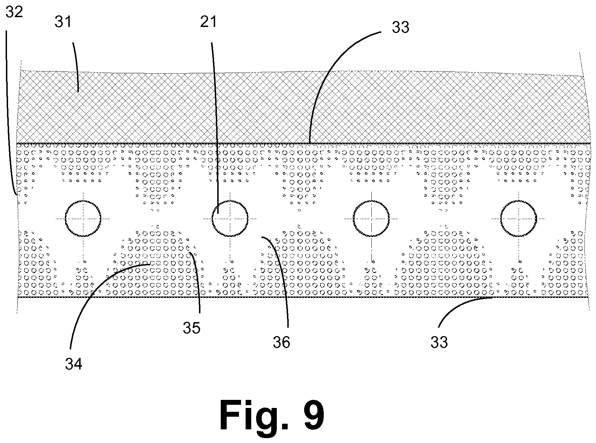

Eine Ausführungsform für eine kontinuierliche einreihige Fügung des Verbundwerkstoffs mit einer Reihe von Bolzen 21 ist in **Figur 9** wiedergegeben. Es ist ersichtlich, dass die homogenen Bereiche 36 der Metallschichten 32 den höchstbelasteten Bereich abdecken und in Form und Größe derart gestaltet sind, dass die Lasteneinleitung und Lastumlagerung optimal gewährleistet werden. Am Blechrand 33 ist auf allen Seiten die strukturierte Metallschicht 32 weiterhin gerade, die Perforationen 50 sind klein im Vergleich zur Dicke der Metallschicht 32. Die Form des Bleches beziehungsweise der Metallschicht 32 ist weiterhin rechteckig und eben, so dass die Integration des verstärkenden Bleches weiterhin unproblematisch ist. Bei Infusionslaminaten (Laminate, die durch Harzinjektion oder -infusion hergestellt werden) verhelfen zudem die Perforationen 50 zu einer Durchtränkung in Laminatdickenrichtung und vereinfachen somit den Herstellungsprozess. Lokale Hybridlaminate in üblicher Ausführung mit homogenen, ungestörten Blechen beziehungsweise Metallschichten 32 lassen sich dagegen nur in Ebenenrichtung durchtränken, da jede Metallschicht 32 eine Injektionsbarriere in Dickenrichtung darstellt.

Der Perforationen 50, 51 füllen sich ohnehin in der Praxis während der Herstellung des Verbundwerkstoffes mit Harz aus den benachbarten Faserverbundschichten 31 vollständig aus. Auf diese Weise entsteht auch ein zusätzlicher Formschluss zwischen den Faserverbundschichten 31 und der jeweiligen Metallschicht 32 mit den Perforationen 50, 51. Dies stabilisiert den erfindungsgemäßen Verbundwerkstoff zusätzlich.

### Bezugszeichenliste

- 11: Faserverbund-Basislaminat
- 12: Übergangsbereich
- 13: hybrider Bereich

- 20: Bohrung
- 21: Bolzen

- 31: Faserverbundschicht
- 32: Verstärkungsschicht, insbesondere Metallschicht
- 33: Rand der Metallschicht 32
- 34: niedrig belasteter Bereich der Metallschicht 32
- 35: höher belasteter Bereich der Metallschicht 32
- 36: stark belasteter Bereich der Metallschicht 32
- 37: Richtung einer Belastung

- 40: Wangenbruch
- 41: Lochleibungsbruch
- 42: Scherbruch

- 50: Perforation
- 51: Perforation

## Patentansprüche

1. Verbundwerkstoff mit mehreren Faserverbundschichten (31) und einem Verstärkungsbereich (13) mit mindestens einer Verstärkungsschicht (32) aus einem die Faserverbundschichten (31) verstärkenden Material, und
mit Perforationen (50, 51) in der Verstärkungsschicht (32),
**dadurch gekennzeichnet,**
**dass** eine oder mehrere Bohrungen (20) durch den Verbundwerkstoff in dem Bereich (13) geführt sind, in welchem die Faserverbundschichten (31) mit einer oder mehreren Verstärkungsschichten (32) versehen sind,
**dass** Bolzen (21) durch die Bohrung(en) (20) geführt sind,
**dass** an den Bolzen Angriffsmöglichkeiten für Kräfte vorgesehen sind, **dass** die oder zumindest eine der Verstärkungsschichten (32) in einem Bereich (36) um die Bohrung(en) (20) homogen und perforationsfrei ausgebildet ist, und
**dass** die Verstärkungsschicht (32) in Bereichen (34, 35) außerhalb des Bereiches (36) um die Bohrungen (20) mit Perforationen (50, 51) versehen ist, deren Größe und/oder Zahl pro Fläche in Abhängigkeit vom Beanspruchungszustand der Verstärkungsschicht (32) in den jeweiligen Bereichen (34, 35) ausgebildet ist.

2. Verbundwerkstoff mit mehreren Faserverbundschichten nach Anspruch 1,
**dadurch gekennzeichnet,**
**dass** die Form des homogen und perforationsfrei ausgebildeten Bereiches (36) um die Bohrungen (20) in Abhängigkeit vom Beanspruchungszustand der Verstärkungsschicht (32) in diesem Bereich (36) ausgebildet ist.

3. Verbundwerkstoff mit mehreren Faserverbundschichten nach Anspruch 1 oder 2,
**dadurch gekennzeichnet,**
**dass** die oder eine der Verstärkungsschichten (32) Metallschichten beziehungsweise Metallbleche sind.

4. Verbundwerkstoff mit mehreren Faserverbundschichten nach Anspruch 3,
**dadurch gekennzeichnet,**
**dass** die oder eine der Verstärkungsschichten (32) aus Stahl, Titan, Kobalt oder Aluminium besteht.

5. Verbundwerkstoff mit mehreren Faserverbundschichten nach einem der vorstehenden Ansprüche,
**dadurch gekennzeichnet,**
**dass** die Perforationen (50, 51) mit bei der Herstellung des Laminats des Verbundwerkstoffs anfallendem Harz befüllt sind.

6. Verbundwerkstoff mit mehreren Faserverbundschichten nach einem der vorstehenden Ansprüche,
**dadurch gekennzeichnet,**
**dass** die Perforationen (50, 51) durch Laserverfahren, spanende mechanische Verfahren und/oder Elektronenstrahlverfahren realisiert sind.

7. Verbundwerkstoff mit mehreren Faserverbundschichten nach einem der vorstehenden Ansprüche,
**dadurch gekennzeichnet,**
**dass** die Perforationen (50, 51) einen Durchmesser von bis zu 60 Micrometer aufweisen.

## Claims

1. A composite material with a plurality of fibre composite layers (31) and a region of reinforcement (13) with at least one reinforcement layer (32) of a material which reinforces the fibre composite layers (31), and with perforations (50, 51) in the reinforcement layer (32)
**characterised**
**in that** one or more bores (20) are conducted through the composite material in the region (13), in which the fibre composite layers (31) are provided with one or more reinforcement layers (32),
**in that** bolts (21) are guided through the bore(s) (20),
**in that** facilities for engaging with forces are provided at the bolts,
**in that** the or at least one of the reinforcement layers (32) are configured to be homogenous and free of perforations in a region (36) around the bore(s) (20), and **in that** the reinforcement layer (32) in regions (34, 35) outside the region (36) around the bores (20) is provided with perforations (51, 52), the size and/or number per unit area of which are formed in dependence on the loading condition of the reinforcement layer (32) in the respective regions (34, 35).

2. A composite material with a plurality of fibre composite layers according to claim 1,
**characterised**
**in that** the shape of the homogenous and perforation-free configured region (36) around the bores (20) is formed in dependence on the loading condition of the reinforcement layer (32) in this region (36).

3. A composite material with a plurality of fibre composite layers according to claim 1 or 2,
**characterised**
**in that** the or one of the reinforcement layers (32) are metallic layers or metal sheets.

4. A composite material with a plurality of fibre composite layers according to claim 3,
**characterised**
**in that** the or one of the reinforcement layers (32) consists of steel, titanium, cobalt, or aluminium.

5. A composite material with a plurality of fibre composite layers according to any of the preceding claims,
**characterised**
**in that** the perforations (50, 51) are filled with resin present during the manufacture of the laminate of the composite material.

6. A composite material with a plurality of fibre composite layers according to one of the preceding claims,
**characterised**
**in that** the perforations (50, 51) are realised by a laser method, a mechanical machining method, and/or an electronic beam method.

7. A composite material with a plurality of fibre composite layers according to one of the preceding claims,
**characterised**
**in that** the perforations (50, 51) have a diameter of up to 60 micrometres.

## Revendications

1. Matière composite avec plusieurs couches composites fibreuses (31) et une zone de renforcement (13) avec au moins une couche de renforcement (32) en un matériau renforçant les couches composites fibreuses (31), et avec des perforations (50, 51) dans la couche de renforcement (32),
**caractérisée en ce**
**qu'**un ou plusieurs perçages (20) à travers la matière composite sont guidés dans la zone (13) dans laquelle les couches composites fibreuses (31) sont pourvues d'une ou de plusieurs couches de renforcement (32),
**que** des boulons (21) sont guidés à travers le(s) perçage(s) (20),
**que** des possibilités d'attaque pour des forces sont prévues au niveau des boulons,
**que** les ou au moins une des couches de renforcement (32) sont réalisées de manière homogène et sans perforation dans une zone (36) autour du/des perçage(s) (20), et
**que** la couche de renforcement (32) est pourvue de perforations (50, 51) dans des zones (34, 35) en dehors de la zone (36) autour des perçages (20), dont la taille et/ou le nombre par surface est réalisé en fonction de l'état de sollicitation de la couche de renforcement (32) dans les zones (34, 35) respectives.

2. Matière composite avec plusieurs couches composites fibreuses selon la revendication 1,
**caractérisée en ce**
**que** la forme de la zone (36) réalisée de manière homogène et sans perforation est réalisée autour des perçages (20) en fonction de l'état de sollicitation de la couche de renforcement (32) dans cette zone (36).

3. Matière composite avec plusieurs couches composites fibreuses selon la revendication 1 ou 2,
**caractérisée en ce**
**que** les ou une des couches de renforcement (32) sont des couches métalliques ou des tôles métalliques.

4. Matière composite avec plusieurs couches composites fibreuses selon la revendication 3,
**caractérisée en ce**
**que** les ou une des couches de renforcement (32) sont constituées d'acier, de titane, de cobalt ou d'aluminium.

5. Matière composite avec plusieurs couches composites fibreuses selon l'une quelconque des revendications précédentes,
**caractérisée en ce**
**que** les perforations (50, 51) sont remplies de résine engendrée lors de la fabrication du laminé de la matière composite.

6. Matière composite avec plusieurs couches composites fibreuses selon l'une quelconque des revendications précédentes,
**caractérisée en ce**
**que** les perforations (50, 51) sont réalisées par des procédés au laser, des procédés mécaniques par enlèvement de copeaux et/ou des procédés par faisceau électronique.

7. Matière composite avec plusieurs couches composites fibreuses selon l'une quelconque des revendications précédentes,
**caractérisée en ce**
**que** les perforations (50, 51) présentent un diamètre allant jusqu'à 60 micromètres.
